(19) Europäisches Patentamt
European Patent Office
Office européen des brevets

(11) **EP 2 940 765 A1**

(12) **EUROPEAN PATENT APPLICATION**
published in accordance with Art. 153(4) EPC

(43) Date of publication:
04.11.2015 Bulletin 2015/45

(51) Int Cl.:
*H01M 8/02* (2006.01)    *C08J 5/22* (2006.01)
*H01B 13/00* (2006.01)   *H01M 8/10* (2006.01)
*H01B 1/06* (2006.01)

(21) Application number: 13868305.7

(22) Date of filing: 27.12.2013

(86) International application number:
PCT/JP2013/007698

(87) International publication number:
WO 2014/103338 (03.07.2014 Gazette 2014/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.12.2012 JP 2012286734

(71) Applicant: Nitto Denko Corporation
Ibaraki-shi, Osaka 567-8680 (JP)

(72) Inventors:
• MATSUDA, Koso
Ibaraki-shi
Osaka 567-8680 (JP)
• NAKANO, Takeshi
Ibaraki-shi
Osaka 567-8680 (JP)
• NISHII, Hiroyuki
Ibaraki-shi
Osaka 567-8680 (JP)

(74) Representative: Hart-Davis, Jason et al
Cabinet Beau de Loménie
158, rue de l'Université
75340 Paris Cedex 07 (FR)

(54) **METHOD FOR PRODUCING ANION EXCHANGE MEMBRANE, MEMBRANE-ELECTRODE ASSEMBLY FOR FUEL CELLS, AND FUEL CELL**

(57)    The method for producing an anion exchange membrane according to the present invention includes the steps of: irradiating a substrate composed of a hydrocarbon polymer with radiation and heat-treating the irradiated substrate so as to form a crosslinked structure between chains of the hydrocarbon polymer contained in the substrate; further irradiating the substrate, in which the crosslinked structure has been formed, with radiation and graft-polymerizing, onto the irradiated substrate, a monomer containing a site into which a functional group having anion conducting ability can be introduced and an unsaturated carbon-carbon bond so as to form a graft chain composed of the polymerized monomer; and introducing the functional group having anion conducting ability into the site of the formed graft chain.

FIG.1

**Description**

TECHNICAL FIELD

The present invention relates to a method for producing an anion exchange membrane. The present invention also relates to a fuel cell membrane electrode assembly and a fuel cell, each including an anion exchange membrane obtained by the production method.

BACKGROUND ART

Polymer electrolyte fuel cells (PEFCs) are a type of fuel cell in which a polymer electrolyte membrane is used as an ion exchange portion. Due to their advantages such as operability at lower temperatures than the operation temperatures of other types of fuel cells and high power densities, PEFCs are highly expected to be widely used in the future. Cation exchange PEFCs using cation exchange membranes exchanging hydrogen ions have been commonly used. However, recently, anion exchange PEFCs using anion exchange membranes have been reported because, for example, they can generate electric power without using platinum, which is a precious and limited natural resource, as a catalyst. In anion exchange PEFCs, various less expensive base metals can be used as catalysts. In addition, anion exchange PEFCs have another great advantage that liquid fuels (alkaline liquid fuels) such as alcohol and hydrazine can be used, and that $CO_2$ is not produced on the principle of power generation in the case where hydrazine is used as a fuel, although hydrazine is a liquid fuel.

Patent Literature 1 discloses an anion exchange membrane obtained by radiation-induced graft polymerization of a monomer containing an anion exchange group or a group into which an anion exchange group can be introduced, onto a substrate made of a fluorine-containing polymer, and a PEFC including this anion exchange membrane as an electrolyte.

Patent Literature 2 discloses a method for producing an anion exchange membrane, including the steps of: selecting a hydrocarbon polymer film; radiation grafting the hydrocarbon polymer film with a monomer; and adding a quaternizing agent to impart ionic conductivity. In this method, the monomer is presented in the form of a monomer/diluent mixture, and the diluent contains an alcohol and a hydrocarbon solvent.

In a PEFC, an anion exchange membrane is usually used in the form of a membrane electrode assembly (MEA) in which a catalyst layer is disposed on the surface of the anion exchange membrane.

CITATION LIST

Patent Literature

Patent Literature 1: JP 2000-331693 A
Patent Literature 2: JP 2010-516853 T

SUMMARY OF INVENTION

Technical Problem

Like a cation exchange membrane in a cation exchange PEFC, an anion exchange membrane in a PEFC is required to function as an electrolyte that conducts ions (anions) between an anode and a cathode and as a barrier that separates a fuel supplied to the anode and an oxidant supplied to the cathode. If the functions as an electrolyte and a barrier are insufficient, the power generation efficiency of the PEFC decreases.

The function as an electrolyte is improved by high anionic conductivity. In the case where the anion exchange membrane is a grafted membrane, its anionic conductivity is increased, for example, by attaching as many graft chains containing a functional group having anion conducting ability as possible to a substrate (i.e., by increasing the grafting ratio). However, simply increasing the grafting ratio does not necessarily lead to an increase in the power generation efficiency of the PEFC because the fuel permeability also increases in proportion to the increase in the anionic conductivity. This means that high anionic conductivity and low fuel permeability are in a trade-off relationship in an anion exchange membrane as a grafted membrane.

It is an object of the present invention to provide a method for producing an anion exchange membrane, by which an anion exchange membrane, as a grafted membrane, having both high anionic conductivity and low fuel permeability can be produced.

Solution to Problem

The method for producing an anion exchange membrane of the present invention includes the steps of: irradiating a substrate composed of a hydrocarbon polymer with radiation and heat-treating the irradiated substrate so as to form a crosslinked structure between chains of the hydrocarbon polymer; further irradiating the substrate, in which the crosslinked structure has been formed, with radiation and graft-polymerizing, onto the irradiated substrate, a monomer containing a site into which a functional group having anion conducting ability can be introduced and an unsaturated carbon-carbon bond so as to form a graft chain composed of the polymerized monomer; and introducing the functional group having anion conducting ability into the site of the formed graft chain.

The fuel cell membrane electrode assembly (MEA) of the present invention is a fuel cell MEA including: an anion exchange membrane; and a catalyst layer disposed on a surface of the anion exchange membrane. The anion exchange membrane is an anion exchange membrane obtained by the method for producing an anion exchange membrane of the present invention.

The fuel cell of the present invention is a fuel cell including a MEA having an anion exchange membrane (anion exchange PEFC). The MEA is the fuel cell MEA of the present invention.

Advantageous Effects of Invention

According to the present invention, it is possible to produce an anion exchange membrane, as a grafted membrane, having both high anionic conductivity and low fuel permeability.

BRIEF DESCRIPTION OF DRAWINGS

FIG. 1 is a schematic diagram showing an example of a fuel cell membrane electrode assembly of the present invention.
FIG. 2 is a schematic diagram showing an example of a fuel cell of the present invention.

DESCRIPTION OF EMBODIMENTS

A first aspect of the present disclosure provides a method for producing an anion exchange membrane, including the steps of: irradiating a substrate composed of a hydrocarbon polymer with radiation and heat-treating the irradiated substrate so as to form a crosslinked structure between chains of the hydrocarbon polymer; further irradiating the substrate, in which the crosslinked structure has been formed, with radiation and graft-polymerizing, onto the irradiated substrate, a monomer containing a site into which a functional group having anion conducting ability can be introduced and an unsaturated carbon-carbon bond so as to form a graft chain composed of the polymerized monomer; and introducing the functional group having anion conducting ability into the site of the formed graft chain.

A second aspect of the present disclosure provides the method for producing an anion exchange membrane according to the first aspect, wherein the hydrocarbon polymer is at least one selected from polyolefin, polystyrene, and polyetherketone.

A third aspect of the present disclosure provides the method for producing an anion exchange membrane according to the first aspect, wherein the hydrocarbon polymer is ultra-high molecular weight polyethylene.

A fourth aspect of the present disclosure provides the method for producing an anion exchange membrane according to any one of the first to third aspects, wherein the monomer is halogenated alkylstyrene.

A fifth aspect of the present disclosure provides a fuel cell membrane electrode assembly (MEA) including: an anion exchange membrane; and a catalyst layer disposed on a surface of the anion exchange membrane, wherein the anion exchange membrane is a membrane obtained by the method for producing an anion exchange membrane according to any one of the first to fourth aspects.

A sixth aspect of the present disclosure provides a fuel cell including a membrane electrode assembly (MEA) having an anion exchange membrane, wherein the membrane electrode assembly is the fuel cell membrane electrode assembly according to the fifth aspect.

(Method for Producing Anion Exchange Membrane)

The method for producing an anion exchange membrane according to the present invention includes the steps of:

(i) irradiating a substrate composed of a hydrocarbon polymer with radiation and heat-treating the irradiated substrate so as to form a crosslinked structure between chains of the hydrocarbon polymer (crosslinking step);

(ii) further irradiating the substrate, in which the crosslinked structure has been formed in the crosslinking step, with radiation and graft-polymerizing, onto the irradiated substrate, a monomer (monomer A) containing a site into which a functional group having anion conducting ability can be introduced and an unsaturated carbon-carbon bond so as to form a graft chain composed of the polymerized monomer (polymerizing step); and

(iii) introducing the functional group having anion conducting ability into the site of the graft chain formed in the polymerizing step (introducing step).

An anion exchange membrane can be obtained by this method. The anion exchange membrane thus obtained is a grafted membrane in which graft chains containing a functional group having anion conducting ability are bonded to a substrate containing a crosslinked hydrocarbon polymer (crosslinked hydrocarbon film). The anion exchange membrane thus obtained is an anion exchange membrane having both high anionic conductivity and low fuel permeability, that is, achieving a good balance between anionic conductivity and fuel permeability. When this anion exchange membrane is used in a fuel cell MEA or in a fuel cell (anion exchange PEFC), it is possible to construct a fuel cell in which not only high fuel utilization rate and high power output are provided during operation but also gas generation or material degradation caused by the side reaction of the fuel that has passed through the anion exchange membrane is suppressed.

In the crosslinking step, a substrate (substrate film) composed of a hydrocarbon polymer is irradiated with radiation (first irradiation), and then the irradiated substrate is heat-treated. Reactive sites (typically, radical reactive sites) are formed in the hydrocarbon polymer contained in the substrate by the first irradiation, and a bond is formed between the reactive sites by the heat applied in the subsequent heat treatment. Thus, a crosslinked structure is formed between the chains of the hydrocarbon polymer contained in the substrate.

The hydrocarbon polymer is not particularly limited. For example, the hydrocarbon polymer is at least one selected from polyolefin, polystyrene, and polyetherketone. When a substrate composed of any of these polymers is used, the balance between the anionic conductivity and the fuel permeability of the resulting anion exchange membrane is particularly improved. In addition, since these polymers are less expensive than fluorine polymers, it is possible to reduce the production costs of anion exchange membranes and those of MEAs and PEFCs including these anion exchange membranes. Further, unlike fluorine polymers, these polymers have less environmental impact such as release of halogens when they are discarded.

Examples of the polyolefin include polyethylene, polypropylene, and polybutene. Polyethylene and polypropylene are preferred. The polyolefin may be ultra-high molecular weight polyolefin, and in that case, it is typically ultra-high molecular weight polyethylene (UHPE). The molecular weight of ultra-high molecular weight polyolefin is, for example, 800000 or more in terms of the weight average molecular weight Mw. Examples of the polyethylene include high-density polyethylene (HDPE) and low-density polyethylene (LDPE) as well as ultra-high molecular weight polyethylene.

Examples of the polyetherketone include polyetheretherketone (PEEK) and polyetherketone defined in a narrow sense that has one ether structure and one ketone structure in its structural unit.

The substrate (hydrocarbon film) may contain one or two or more types of hydrocarbon polymers, and may also contain any other polymer or low-molecular weight compound in addition to the hydrocarbon polymers as long as the effects of the present invention can be obtained. The substrate may contain a hydrocarbon polymer, for example, as a main component (as a component with the highest content) of the substrate. The content of the hydrocarbon polymer as a main component is, for example, at least 50 wt.%. The content may be at least 70 wt.%, at least 80 wt.%, or even at least 90 wt.%. The substrate may consist of a hydrocarbon polymer.

The substrate can be formed from a hydrocarbon polymer by any of known film forming techniques such as casting, skiving from a sintered body, and kneading and molding. Any of these film forming techniques and uniaxial stretching or (simultaneous or sequential) biaxial stretching may be combined to form the substrate as a stretched film. A commercially available hydrocarbon film also can be used as the substrate.

Preferably, the anion exchange membrane serving as an electrolyte membrane has a low resistance as a membrane (membrane resistance), and in that case, the power generation efficiency of a PEFC having this anion exchange membrane incorporated therein is improved. In order to reduce the membrane resistance, for example, the thickness of the anion exchange membrane can be reduced, that is, the thickness of the substrate film can be reduced. However, when the thickness of the substrate is reduced too much, the mechanical strength of the resulting anion exchange membrane decreases and the membrane is more susceptible to defects such as cracks and pinholes. In view of these, in the case where the anion exchange membrane is used as an electrolyte membrane in a PEFC, the thickness of the substrate is preferably 5 to 100 $\mu$m, and more preferably 10 to 50 $\mu$m. The thickness of the substrate is increased by the introduction of graft chains in the subsequent polymerizing step and the introduction of functional groups in the subsequent introducing step. Therefore, the thickness of the anion exchange membrane (in the dry state) is preferably 5 to 130 $\mu$m, and more preferably 12 to 70 $\mu$m.

In the first irradiation in the crosslinking step, the substrate composed of a hydrocarbon polymer is irradiated with radiation. The radiation is, for example, ionizing radiation such as $\alpha$ rays, $\beta$ rays, $\gamma$ rays, electron beams, or ultraviolet rays, and γ rays or electron beams are preferred. The first irradiation itself can be carried out in the same manner as in the step of irradiating a substrate film with radiation in conventional radiation-induced graft polymerization. However, in order to introduce a crosslinked structure into the substrate, it is usually necessary to deliver a higher radiation dose than that to be delivered in graft polymerization (for example, in the second irradiation to be described later).

When the radiation dose is too low in the first irradiation, the crosslinking of the substrate becomes insufficient, and the fuel permeability of the resulting anion exchange membrane does not decrease sufficiently in some cases. On the other hand, when the radiation dose is too high, the polymer constituting the substrate degrades or the crosslinking reaction proceeds excessively, resulting in a decrease in the grafting ratio or embrittlement of the resulting anion exchange membrane in some cases. In the production method of the present invention, the crosslinking step and the subsequent polymerizing step each includes a step of irradiating the substrate with radiation. Therefore, the production method of the present invention is advantageous in terms of the efficiency and cost of producing anion exchange membranes.

In the case where the substrate is composed of HDPE, the radiation dose in the first irradiation is, for example, 120 to 1600 kGy, and it is preferably 480 to 1200 kGy. In the case where the substrate is composed of UHPE, the radiation dose is, for example, 90 to 1200 kGy, and it is preferably 120 to 720 kGy. The reason why a lower radiation dose is preferred in the case of an UHPE substrate than in the case of a HDPE substrate is that UHPE is a polymer having a higher molecular weight than HDPE and therefore the greater crosslinking effect can be obtained with a smaller number of crosslinking sites. The higher the radiation dose is, the more the substrate is affected by heat generated. Therefore, it is preferable that the substrate be composed of UHPE from which the greater crosslinking effect can be obtained with a lower radiation dose.

In the crosslinking step, after the first irradiation, the radiation-irradiated substrate is heat-treated so as to form a crosslinked structure between the chains of the hydrocarbon polymer contained in the substrate. The method of the heat treatment is not limited as long as the substrate can be maintained at a heat treatment temperature for a certain duration of time, and any of known techniques can be used. For example, the substrate can be placed in a constant temperature bath such as a drying oven or an electric furnace whose temperature is maintained at the heat treatment temperature. According to the type of the hydrocarbon polymer, the heat treatment temperature is selected from a range of temperatures at which the substrate does not melt and at which crosslinking reaction proceeds from the reactive sites formed by the first irradiation. The heat treatment temperature is, for example, 40°C to 140°C, and it is preferably 40°C to 120°C. Within this range of temperatures, it is possible to ensure the mobility of the molecular chains of the hydrocarbon polymer which is necessary for crosslinking, while suppressing the heat-induced deformation of the substrate. The duration of the heat treatment is, for example, 20 to 60 minutes.

Formation of a crosslinked structure between the chains of the hydrocarbon polymer contained in the substrate can be confirmed, for example, by the fact that when the substrate is immersed in a solution that dissolves the polymer in the uncrosslinked state, the substrate is not completely dissolved but a part thereof remains undissolved if the crosslinked structure has been formed in the polymer. In one example, in the case where the hydrocarbon polymer constituting the substrate is HDPE, the substrate can be immersed in xylene at 120°C for 6 hours. Furthermore, the degree of crosslinking can be evaluated as the gel fraction based on the weight retention rate between the substrate before the immersion in the solution and the substrate after the immersion in the solution. In the case of HDPE, the degree of crosslinking of the substrate after the crosslinking step (the degree of crosslinking between the chains of the hydrocarbon polymer) is preferably 30 to 95%, and more preferably 50 to 90%. When the degree of crosslinking of the substrate is too low, the fuel permeability of the resulting anion exchange membrane does not decrease sufficiently in some cases. When the degree of crosslinking of the substrate is too high, the grafting ratio after the polymerizing step decreases or the resulting anion exchange membrane is embrittled in some cases.

In the case where the hydrocarbon polymer constituting the substrate is UHPE, the solutions that dissolve UHPE are limited. For example, even if the substrate is immersed in xylene at 120°C for 6 hours, UHPE is not completely dissolved therein, which makes it difficult to evaluate the gel fraction of the substrate. However, in this case, the degree of crosslinking of the substrate can be evaluated based on the crystal melting enthalpy ratio ($\Delta H_2/DH_1$). Specifically, the crystal melting enthalpy ($\Delta H_1$) when the crosslinked substrate is melted and the crystal melting enthalpy ($\Delta H_2$) when the substrate thus melted is cooled to be recrystallized and then melted again are measured by differential scanning calorimetry (DSC) and the ratio of these enthalpies ($\Delta H_2/\Delta H_1$) is calculated. The higher the degree of crosslinking of the substrate is, the more the crystallization is inhibited on the recrystallization. As a result, the $\Delta H_2$ decreases and the ratio $\Delta H_2/\Delta H_1$ decreases accordingly. In the case where the substrate is composed of UHPE, the crystal melting enthalpy ratio ($\Delta H_2/\Delta H_1$) of the substrate after the crosslinking step is preferably 0.5 to 0.9, and more preferably 0.7 to 0.85. When the ratio is too high (i.e., the degree of crosslinking is too low), the fuel permeability of the resulting anion exchange membrane does not decrease sufficiently in some cases. When the ratio is too low (i.e., the degree of crosslinking is too high), the grafting ratio after the polymerizing step decreases or the resulting anion exchange membrane is embrittled in some cases.

The first irradiation and the heat treatment in the crosslinking step can be performed sequentially or simultaneously. In the case where a long interval between the first irradiation and the heat treatment is provided, the substrate after the first irradiation may be maintained at a low temperature (for example, at -30°C or lower) once, and then subjected to the heat treatment. By maintaining the substrate at a low temperature, the loss of the reactive sites formed in the substrate is suppressed in the interval before the heat treatment.

In the polymerizing step, the substrate (crosslinked hydrocarbon film) having the crosslinked structure formed in the crosslinking step is further irradiated with radiation (second irradiation) so as to form graft chains in (to perform graft polymerization onto) the irradiated substrate. The polymerizing step may be performed in the same manner as the step of irradiating a substrate film with radiation and forming a graft chain in the irradiated substrate film in a conventional radiation-induced graft polymerization.

The radiation used in the second irradiation is, for example, ionizing radiation such as $\alpha$ rays, $\beta$ rays, $\gamma$ rays, electron beams, or ultraviolet rays, and $\gamma$ rays or electron beams are preferred. The radiation dose is not particularly limited. The radiation dose is, for example, 1 kGy to 400 kGy, and preferably 10 kGy to 300 kGy. When the radiation dose is 1 kGy or more, it is possible to prevent the grafting ratio from decreasing too much. When the radiation dose is 400 kGy or less, it is possible to suppress the excessive polymerization reaction and deterioration of the substrate due to the irradiation.

The substrate after the second irradiation may be maintained at a low temperature (for example, -30°C or lower) until the graft polymerization is performed.

In the polymerizing step, a monomer A containing a site into which a functional group having anion conducting ability can be introduced and an unsaturated carbon-carbon bond are graft-polymerized onto the substrate that has undergone the second irradiation so as to form a grafted membrane containing graft chains composed of the polymerized monomer A.

The monomer A is a monomer having polymerizability derived from an unsaturated carbon-carbon bond. The unsaturated carbon-carbon bond is, for example, a carbon-carbon double bond or a carbon-carbon triple bond, and it is typically a carbon-carbon double bond. The carbon-carbon double bond is, for example, a vinyl group, and in this case, the monomer A is a monomer having vinyl polymerizability. The monomer A may contain a benzene ring (such as a phenylene group) serving as a resonance structure to improve the polymerizability.

The monomer A contains a site into which a functional group having anion conducting ability can be introduced. Therefore, a graft chain formed by the polymerization of the monomer A contains a site into which a functional group having anion conducting ability can be introduced. Such a site is, for example, a halogenated alkyl group. When a halogenated alkyl group reacts with trialkylamine, it can form a quaternary ammonium salt group, which is a functional group having anion conducting ability.

The monomer A itself may have a functional group having anion conducting ability, and in this case, the introducing step can be omitted.

Preferably, the monomer A has a vinyl group as an unsaturated carbon-carbon bond, and a halogenated alkyl group as a site (molecular structure) into which a functional group having anion conducting ability can be introduced.

In the case where the monomer A has a halogenated alkyl group, because of its high reactivity, a functional group having anion conducting ability can be introduced efficiently in the introducing step. In addition, in the case where the formed graft chains are crosslinked later (in the case where a crosslinked structure is introduced into the graft chains), the crosslinking reaction is allowed to proceed efficiently. Examples of the halogenated alkyl group include a halogenated methyl group, a halogenated ethyl group, a halogenated propyl group, and a halogenated butyl group. Examples of halogens contained in the halogenated alkyl group include chlorine, bromine, fluorine, and iodine.

Preferred specific examples of the monomer A is halogenated alkylstyrene. Examples of halogenated alkylstyrene include chloromethylstyrene, chloroethylstyrene, chloropropylstyrene, chlorobutylstyrene, bromomethylstyrene, bromoethylstyrene, bromopropylstyrene, bromobutylstyrene, iodomethylstyrene, iodoethylstyrene, iodopropylstyrene, and iodobutylstyrene. The positional relationship between the halogenated alkyl group and the unsaturated carbon-carbon bond (a vinyl group in this case) in the halogenated alkylstyrene is not particularly limited as long as the production method of the present invention can be carried out. They may be in the meta and/or para position, and for example, they are in the para position.

Other specific examples of the monomer A include halogenated alkyl vinyl ketone ($X-R-C(=O)-CH=CH_2$) and halogenated alkyl acrylamide ($X-R-NH-C(=O)-CH=CH_2$).

One type of monomer A may be used alone to perform graft polymerization, or two or more types of monomers A may be used to perform graft polymerization. When two or more types of monomers A are used, graft chains as copolymer chains of these monomers A are formed.

The graft polymerization is carried out, for example, in a solid-liquid two-phase system. More specifically, for example, graft polymerization is allowed to proceed by bringing the substrate (solid phase) that has undergone the second irradiation into contact with a solution (liquid phase) containing the monomer A. The contact is, for example, immersion of the substrate in the solution. It is preferable to carry out the graft polymerization in an atmosphere with the lowest possible oxygen concentration in order to prevent the reaction from being inhibited by the presence of oxygen. For this purpose, for example, the solution containing the monomer A may be bubbled with nitrogen gas or the like.

As a solvent used in the solution (polymerization liquid) containing the monomer A, any solvent in which the monomer A is soluble but the substrate is insoluble is selected. The solvent may be selected according to the solubility of the monomer A and that of the substrate. The solvent is not particularly limited. For example, aromatic compounds such as: aromatic hydrocarbons including benzene, toluene, and xylene; and phenols including phenol and cresol can be used. When an aromatic compound is used as the solvent, the grafting ratio tends to be higher. In addition, since a free polymer, as a by-product, which has not graft-polymerized on the substrate (i.e., which is separated from the substrate) is dissolved in the aromatic compound, the solution can be kept homogeneous. The solvent may be a mixture of two or more solvents. In the case where the monomer A is a liquid at a temperature at which graft polymerization is to be carried out, the graft polymerization may be carried out without using a solvent.

The concentration of the monomer A in the solution can be determined according to the polymerizability of the monomer A and/or the target grafting ratio, but it is preferably 20 wt.% or more. When the concentration of the monomer A is 20 wt.% or more, the grafting reaction is allowed to proceed sufficiently.

It is preferable to carry out graft polymerization so that the weight (dry weight) of the substrate after the graft polymerization (i.e., the total of the weight of the substrate and the weight of the graft components) be about 1.3 to 4.0 times the weight (dry weight) of the substrate before the graft polymerization. When this ratio is too small, the graft components enough to form an anion exchange membrane may have not been introduced. When this ratio is too large, excessive polymerization reaction may cause a decrease in the strength of the resulting anion exchange membrane and MEA.

A specific example of the graft polymerization is as follows. A solution containing the monomer A is poured into a vessel of glass, stainless steel, or the like. Next, in order to remove dissolved oxygen, which inhibits the graft polymerization, the solution is degassed under reduced pressure and bubbled with an inert gas such as nitrogen gas. Next, the substrate after the second irradiation is put into the solution to carry out graft polymerization. Through the graft polymerization, graft chains having structural units derived from the monomer A are attached to the crosslinked hydrocarbon polymer constituting the substrate. The duration of the graft polymerization is, for example, about 5 minutes to 12 hours. The reaction temperature is, for example, 0°C to 100°C (preferably 40°C to 80°C). Next, the substrate after graft polymerization is taken from the solution. Next, in order to remove the solvent, an unreacted monomer, and a free polymer separated from the substrate, the substrate taken from the solution is washed with an appropriate amount of dissolving agent (typically, washed 3 to 6 times), followed by drying. The dissolving agent is selected from dissolving agents in which the monomer and free polymer are soluble but the substrate after graft polymerization and graft chains are insoluble. For example, the dissolving agent is toluene or acetone.

In the introducing step, a functional group (anion exchange group) having anion conducting ability is introduced into a site which is contained in a graft chain and into which a functional group having anion conducting ability can be introduced. Thus, an anion exchange membrane is obtained.

The introducing step can be carried out in the same manner as in the step of introducing an anion exchange group in the production of a conventional anion exchange membrane as a grafted membrane.

For example, in the case where the site is a halogenated alkyl group, quaternization treatment can be performed using amine so as to introduce an anion exchange group (quaternary ammonium salt group) into the graft chain. Examples of the amine include: trialkylamines such as trimethylamine, triethylamine, and dimethylbutylamine; diamines such as ethylenediamine; and aromatic amines such as pyridine and imidazole. A preferred combination is a combination of chloromethylstyrene as the site and dimethylbutylamine as the amine.

The substrate that has undergone the introducing step may be washed with alcohol, acid, pure water, or the like, if necessary.

The production method of the present invention can include any optional steps in addition to the above-mentioned steps as long as an anion exchange membrane can be produced. The optional step is, for example, a step of crosslinking graft chains. Graft chains can be crosslinked, for example, by irradiating the substrate that has undergone the polymerizing step with radiation and then heat-treating the irradiated substrate.

The anion exchange membrane obtained by the production method of the present invention is a grafted membrane in which a graft chain having anion conducting ability are graft-polymerized onto the substrate composed of a crosslinked hydrocarbon polymer.

The application of the anion exchange membrane obtained by the production method of the present invention is not particularly limited. The anion exchange membrane can be used in the same applications as those of conventional anion exchange membranes, for example, in electrolyte membranes and MEAs for anion exchange PEFCs. When this anion exchange membrane having both high anion conductivity and low fuel permeability is used as an electrolyte membrane or in a MEA in an anion exchange PEFC, it is possible to construct a fuel cell in which not only high fuel utilization rate and high power output are provided during operation but also gas generation and material degradation caused by the side reaction of the fuel that has passed through the anion exchange membrane are suppressed.

(Membrane Electrode Assembly)

The MEA for a fuel cell of the present invention includes an anion exchange membrane and a catalyst layer disposed on the surface of the membrane, and this anion exchange membrane is an anion exchange membrane obtained by the production method of the present invention.

The anion exchange membrane obtained by the production method of the present invention is as described above. The catalyst layer may be the same as a catalyst layer included in a known MEA for an anion exchange PEFC. Unlike a cation exchange PEFC, a catalyst is not necessarily a noble metal such as platinum (Pt). For example, base metals such as nickel, cobalt and iron can be used. The configuration of the catalyst layer, such as a specific catalyst contained therein, on the anode side of the MEA (anode catalyst layer) may be different from or the same as that on the cathode side (cathode catalyst layer).

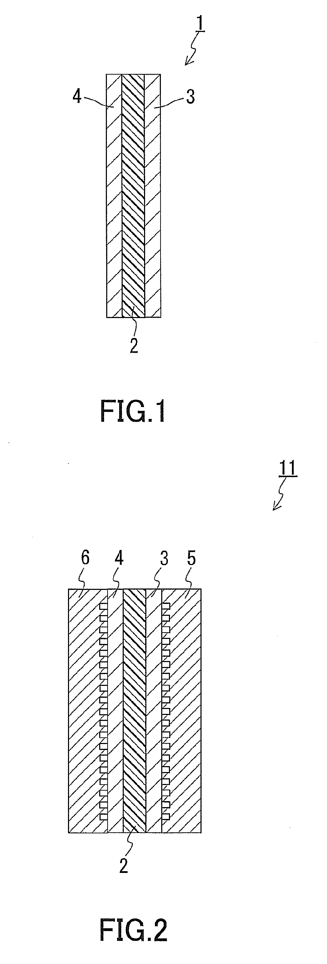

In the MEA of the present invention, the catalyst layer is disposed on the surface of the anion exchange membrane. Typically, the anion exchange membrane and the catalyst layer are integrated together by a technique such as hot pressing. Usually, a pair of catalyst layers, that is, an anode catalyst layer and a cathode catalyst layer, are disposed respectively on the principal surfaces of the anion exchange membrane. FIG. 1 shows an example of the fuel cell MEA of the present invention. A MEA1 shown in FIG. 1 includes an anion exchange membrane 2, an anode catalyst layer 3 and a cathode catalyst layer 4. The anode catalyst layer 3 is disposed on one of the principal surfaces of the anion exchange membrane 2, and the cathode catalyst layer 4 is disposed on the other principal surface of the anion exchange membrane 2.

The MEA of the present invention can be formed, for example, by disposing the catalyst layers on the surfaces of the anion exchange membrane obtained by the production method of the present invention. The catalyst layers can be formed in the same manner as in the step of disposing a catalyst layer on the surface of an ion exchange membrane in a conventional MEA production method. The catalyst layers to be disposed can be selected as appropriate from catalyst layers for conventional MEAs that can be used in anion exchange PEFCs.

The MEA of the present invention can include any optional members in addition to the anion exchange membrane and the catalyst layers as long as the effects of the present invention can be obtained.

(Fuel Cell)

The fuel cell of the present invention is an anion exchange PEFC, and includes the MEA of the present invention. Thereby, the power generation efficiency as the anion exchange PEFC is improved.

FIG. 2 shows an example of the fuel cell of the present invention. A fuel cell 11 shown in FIG. 2 includes an anion exchange membrane 2, a pair of catalyst layers (the anode catalyst layer 3 and the cathode catalyst layer 4) disposed so as to sandwich the anion exchange membrane 2 therebetween, and a pair of separators (an anode separator 5 and a cathode separator 6) disposed so as to sandwich the pair of catalyst layers therebetween. These component members are integrated together under pressure applied in the direction perpendicular to the principal surface of each of the members. The anion exchange membrane 2 and the catalyst layers 3 and 4 constitute the MEA 1.

In the fuel cell of the present invention, a fuel is supplied to the anode and an oxidant is supplied to the cathode. Examples of the fuel are alkalline fuels including alcohol, hydrazine (hydrate), etc. Preferably, the fuel contains hydrazine (hydrate) because hydrazine is highly reactive and does not produce $CO_2$ on the principle of power generation. The oxidant is, for example, air.

The fuel cell of the present invention can include, in addition to the MEA of the present invention, a known member as a member constituting a PEFC. For example, the member is a gas diffusion layer, a separator, or the like, when the fuel cell is defined as a single cell, and the member is a fuel supplier, an oxidant supplier, a humidifier, a current collector, a temperature sensor for detecting the state of power generation, an oxygen sensor, a flowmeter, a humidity sensor, or the like, when the fuel cell is defined as a system.

EXAMPLES

Hereinafter, the present invention will be described in more detail by way of Examples. The present invention is not limited to the following Examples.

The methods for evaluating the properties of anion exchange membranes produced in Examples are shown.

[Ionic Conductivity (Anionic Conductivity)]

First, each of the produced anion exchange membranes was cut into a piece of 20 mm $\times$ 30 mm to obtain a specimen, and this specimen was immersed in water at 30°C for at least 2 hours and swollen. Next, the specimen was immersed in water at 60°C for 5 minutes, and a pair of platinum foil electrodes (with a width of 10 mm) were placed on one principal surface of the swollen membrane to obtain a measuring cell. The two platinum foil electrodes were placed on the principal surface, with a distance of 10 mm between them.

Next, the measuring cell was put into water at 60°C, and the impedance between the platinum foil electrodes was measured using an LCR meter. The measurement was performed at frequencies ranging from 10 kHz to 1 MHz. The real part of the impedance thus obtained was plotted on the horizontal axis and the imaginary part thereof was plotted on the vertical axis, and the value of the real part of the minimum impedance was defined as a membrane resistance R ($\Omega$). The ionic conductivity (anionic conductivity) $\sigma$ [S/cm] of the anion exchange membrane was calculated by the following equation (1):

$$(\text{Ionic conductivity } \sigma) = L/(R \times t \times h \times 10^{-4}) \text{ [S/cm]} \qquad (1)$$

where t [$\mu$m] is the thickness of the swollen specimen, h [cm] is the width of the specimen, L [cm] is the distance between the platinum foil electrodes placed.

[Fuel Permeability]

First, each of the produced anion exchange membrane was cut into a piece of 50 mm $\times$ 50 mm to obtain a specimen, and this specimen was immersed in an aqueous solution of KOH with a concentration of 1M for at least 12 hours. Next, the immersed specimen was interposed between two T-shaped cells and the cells were connected together to form an H shaped cell unit, with the specimen located in the center of the crossbar of the H shape. The area of the anion exchange membrane in the connecting portion between the cells was 7.07 cm$^2$. Next, 180 mL of water was poured into one of the cells that faced each other with the anion exchange membrane interposed therebetween and 180 mL of fuel (an aqueous solution of 10 wt.% hydrazine hydrate and 4.19 wt.% KOH) was poured into the other cell. Then, the cells were quickly placed in a water bath at 30°C and the solutions in the cells were stirred. 2 mL of the solution in the cell containing water was sampled at regular intervals from the start of the stirring as the reference time, and at the same time, 2 mL of the solution in the cell containing the fuel was also sampled so that the water pressure applied to the anion exchange membrane in one cell was equal to that in the other cell. The solution sampled from the cell containing water was diluted, and the diluted solution was titrated with an aqueous solution of hydrochloric acid with a concentration of 0.05 N using an automatic potentiometric titrator (AT-510, Kyoto Electronics Manufacturing Co., Ltd.) so as to obtain the content of hydrazine in this solution. The amount of hydrazine that had passed through the anion exchange membrane was calculated from the content thus obtained. Then, the hydrazine permeability coefficient T [mmol/(m • hr)] of the anion exchange membrane was calculated from a change in the amount of hydrazine that had passed through the membrane per unit membrane area and per unit time. The amount of hydrazine that had passed through the membrane was calculated from the temporal change in the content of hydrazine observed at regular intervals by the above-described technique (i.e., from the gradient of a graph with the time elapsed from the reference time to each solution sampling time on the horizontal axis and with the hydrazine content at that solution sampling time on the vertical axis).

[Water Content]

Each of the produced anion exchange membranes was cut into a piece of 20 mm $\times$ 30 mm to obtain a specimen. The weight W1 (g) of the obtained specimen in the dry state and the weight W2 (g) thereof in the water-containing state were measured, and the water content of the anion exchange membrane was calculated from the weight W1 (g) and the weight W2 (g) by the following equation (2). As used in this description, the dry state refers to a state in which, after the specimen is left for at least 2 hours in a constant temperature and humidity laboratory at 23°C and 53% RH, no further dimensional change of the specimen is observed. The water-containing state refers to a state in which, after the specimen is immersed and swollen in water at 30°C for at least 2 hours, no dimensional change of the specimen is observed.

$$(\text{Water content}) = \{(W2 - W1)/W1\} \times 100 \text{ [%]} \qquad (2)$$

[Gel Fraction]

The substrate that had undergone the crosslinking step was cut into a piece of 30 mm $\times$ 30 mm to obtain a specimen. The initial weight W3 (g) of the obtained specimen in the dry state was measured. Next, the specimen was immersed in 100 mL of xylene in a vessel and the vessel was closed. The vessel was placed in a drying oven whose temperature was maintained at 120°C and left for 6 hours, and then insoluble components were removed from the vessel. The insoluble components thus removed were washed with xylene and acetone, and then dried at 80°C for 2 hours. The weight W4 (g) of the insoluble components in this state was measured. The gel fraction of the substrate after the crosslinking step was calculated from the measured weights W3 and W4 by the following equation (3):

$$(\text{Gel fraction}) = (W4/W3) \times 100 \ [\%] \quad\quad (3)$$

[Differential Scanning Calorimetry (DSC)]

The substrate after the crosslinking step was punched into a circular shape with a diameter of 2 mm to obtain a specimen. Next, the obtained specimen was placed in a measuring cell made of aluminum (the mass of the specimen was about 5 mg), and DSC was performed using a differential scanning calorimeter ("DSC 200 F3", manufactured by NETZSCH). In this measurement, (I) the temperature of the specimen was raised from room temperature to 200°C at a temperature rise rate of 10°C/min, then (II) the specimen was cooled from 200°C to 30°C at a temperature decrease rate of 10°C/min, and then (III) the temperature of the specimen was raised again from 30°C to 200°C at a temperature rise rate of 10°C/min. Based on the results thus obtained, the crystal melting enthalpy ($\Delta H_1$) in the first temperature rise (step (I)) and the crystal melting enthalpy ($\Delta H_2$) in the second temperature rise (step (II)) were calculated by integrating the area of the endothermic peak in a range from 100°C to 140°C. Then, the crystal melting enthalpy ratio of the substrate after the crosslinking step was calculated from the obtained enthalpies $\Delta H_1$ and $\Delta H_2$ by the following equation (4):

$$(\text{Crystal melting enthalpy ratio}) = \Delta H_2/\Delta H_1 \quad\quad (4)$$

[Resistance of Anion Exchange Membrane to Alkaline Solution]

For the anion exchange membranes produced in Examples 3 and 4 and Comparative Example 2, their resistance to an alkaline solution at high temperature was evaluated by the following method.

First, each of the produced anion exchange membranes was cut into a piece of 30 mm × 40 mm to obtain a specimen. Next, the obtained specimen was dried in a drying oven (at 60°C for 2 hours), and then the weight of the specimen (the weight before the treatment with an aqueous solution of KOH) was measured. Next, this specimen was immersed in an aqueous solution of KOH with a concentration of 1 N (at 80°C) for 300 hours. After the immersion, the specimen was taken from the aqueous solution of KOH and washed with pure water two or more times, and further was left overnight in the atmosphere. After being left, the specimen was dried in a drying oven (at 60°C for 2 hours), and then the weight of the dried specimen (the weight after the treatment with the aqueous solution of KOH) was measured. The ratio of the weight of the specimen after the treatment to the weight thereof before the treatment (weight retention rate) was calculated by the following equation (5), and, based on the value of this retention rate, the alkali resistance of the anion exchange membrane was evaluated. The closer the weight ratio is to 100%, the higher the alkali resistance of the anion exchange membrane is.

$$(\text{Membrane weight retention rate}) =$$
$$(\text{Weight after treatment}) \ / \ (\text{weight before treatment}) \times 100 \ [\%] \quad\quad (5)$$

(Example 1)

In Example 1, high-density polyethylene (HDPE) films with a thickness of 50 $\mu$m ("HD", manufactured by Tamapoly Co., Ltd.) were used as substrates.

First, each of the HDPE films as a substrate was irradiated with an electron beam at room temperature in a nitrogen atmosphere (first irradiation). Irradiation with the electron beam was performed from one of the principal surface of the HDPE film at an accelerating voltage of 250 kV and a radiation dose of 720 kGy. Next, the HDPE film irradiated with the electron beam was placed in a drying oven whose temperature was maintained at 60°C and left for one hour (heat treatment) so as to allow crosslinking of the HDPE contained in the film to proceed. Thus, a crosslinked HDPE film composed of crosslinked HDPE was obtained. The gel fraction of the crosslinked HDPE film thus obtained was 70%.

Next, the formed crosslinked HDPE film as a substrate was irradiated with an electron beam again at room temperature in a nitrogen atmosphere (second irradiation). Irradiation with the electron beam was performed from one of the principal surface of the crosslinked HDPE film at an accelerating voltage of 250 kV and a radiation dose of 90 kGy. After the electron beam irradiation, the crosslinked HDPE film was cooled to dry ice temperature using dry ice and stored until the next graft polymerization was performed.

Next, 550 g of 4-(chloromethyl)styrene as a monomer A was prepared and bubbled with nitrogen gas to remove oxygen in the monomer solution. A solvent was not used because 4-(chloromethyl)styrene is liquid at ordinary temperature. Next, the films that had been irradiated with the electron beam were immersed in the monomer solution whose temperature was raised to 70°C for 10 minutes, 30 minutes, and 60 minutes, respectively, so as to allow graft polymerization to proceed. Next, the films that had undergone graft polymerization were taken from the solution, and immersed and washed in toluene for at least one hour and then further washed with acetone for 30 minutes. After the washing, the films were dried in a drying oven at 80°C. Thus, grafted membranes were obtained. The grafting ratios of the grafted membranes thus obtained were 54%, 89%, and 111%, respectively, in ascending order of immersion time. The grafting ratio was calculated by the following equation:

$$\text{Grafting ratio} = \{(\text{Membrane weight after graft polymerization}) - (\text{Membrane weight before graft polymerization})\} / (\text{Membrane weight before graft polymerization}) \times 100 \; (\%)$$

That is, the grafting ratio is the ratio of the weight of graft components introduced through graft polymerization to the weight of the substrate before graft polymerization. It should be noted that the membrane weights are all those in the dry state. In Examples and Comparative Examples below, the grafting ratios were calculated in the same manner as described above.

Next, each of the grafted membranes was immersed in an ethanol solution of dimethylbutylamine (with a concentration of 30 wt.%, manufactured by Aldrich) at room temperature for 12 hours so as to perform quaternization treatment of chloromethyl groups of the graft chains. Next, the grafted membrane that had undergone the quaternization treatment was washed with ethanol for 30 minutes. Then, the graft membrane was washed with an ethanol solution of HCl (with a concentration of 1 N) for 30 minutes and further washed with pure water. Then, the membrane was immersed in an aqueous solution of KOH with a concentration of 1 M for 2 hours to allow ion exchange to occur. The membrane was washed with pure water, and then bubbled with carbon dioxide for 30 minutes in pure water. Thus, anion exchange membranes having a carbonate ion-containing quaternary ammonium salt group were obtained.

(Example 2)

Anion exchange membranes were obtained in the same manner as in Example 1, except that HDPE films as substrates were irradiated with an electron beam at a radiation dose of 1200 kGy (i.e., the radiation dose in the first irradiation was 1200 kGy) to crosslink the HDPE films. The gel fraction of these crosslinked HDPE films that had undergone the crosslinking step was 86%. The grafting ratios of the obtained grafted membranes were 51% (immersion time of 10 minutes), 99% (immersion time of 30 minutes), and 139% (immersion time of 60 minutes), respectively, in ascending order of time in which the films after the second irradiation were immersed in the 4-(chloromethyl)styrene solution.

(Comparative Example 1)

Anion exchange membranes were obtained in the same manner as in Example 1, except that HDPE films as substrates were not subjected to the first irradiation and the subsequent heat treatment (formation of a crosslinked structure was not performed), and that the films irradiated with the electron beam for graft polymerization (the films after the second irradiation) were immersed in the 4-(chloromethyl)styrene solution for 15 minutes, 17 minutes, 60 minutes, and 120 minutes, respectively. The grafting ratios of the anion exchange membranes thus obtained were 54%, 62%, 79%, and 82%, respectively, in ascending order of the immersion time. The gel fraction of these HDPE films as substrates was 0% when measured before the graft polymerization.

For each of the anion exchange membranes produced in Examples 1 and 2 and Comparative Example 1, the evaluation results of the ionic conductivity (anionic conductivity), the fuel permeability (hydrazine permeability coefficient), and the water content are shown in Table 1 below.

Table 1

| | Grafting ratio [%] | Ionic conductivity [mS/cm] | Water content [%] | Hydrazine permeability coefficient [mmol/(m • hr)] |
|---|---|---|---|---|
| Example 1 | 54 | 8 | 35 | 0.349 |
| | 89 | 16 | 55 | 0.625 |
| | 111 | 22 | 64 | 0.659 |
| Example 2 | 51 | 8 | 25 | 0.202 |
| | 99 | 15 | 46 | 0.457 |
| | 139 | 20 | 56 | 0.583 |
| Com. Example 1 | 54 | 13 | 42 | 0.623 |
| | 62 | 15 | 57 | 0.662 |
| | 79 | 22 | 71 | 0.869 |
| | 82 | 24 | 74 | 0.880 |

As shown in Table 1, when the membranes having the same ionic conductivity σ were compared, the hydrazine permeability coefficients of Examples 1 and 2 were lower than those of Comparative Example 1. This means that anion exchange membranes having both high ionic conductivity and low fuel permeability were obtained. When the membranes of Examples 1 and 2 having the same ionic conductivity σ were compared, the hydrazine permeability coefficient of Example 2, in which the radiation dose in the first irradiation was higher and thus presumably the degree of crosslinking of the substrate to be graft-polymerized was higher, was lower than that of Example 1.

(Example 3)

In Example 3, ultra-high molecular weight polyethylene (UHPE) films with a thickness of 25 $\mu$m were used as substrates. Each of the UHPE films was produced in the following manner. First, ultra-high molecular weight polyethylene powder ("HI-ZEX MILLION 240M", manufactured by Mitui Chemicals Inc.) was filled into a mold. A pressure of 100 kg/cm$^2$ was applied to the mold at a temperature of 25°C for 10 minutes to preform the powder. Next, the pressure was lowered to 30 kg/cm$^2$ and the temperature was raised to 210°C, and these pressure and temperature were maintained for 120 minutes to melt the ultra-high molecular weight polyethylene powder. Next, the pressure was increased to 100 kg/cm$^2$, and the temperature was lowered to room temperature over 120 minutes while the increased pressure was maintained. After the cooling, the resulting product was removed from the mold. Thus, a cylindrically formed body, that is, a sintered block, with an outer diameter of 80 mm, an inner diameter of 40 mm, and a length of 80 mm was obtained. Next, the formed body was skived to obtain an UHPE skived film with a thickness of 25 $\mu$m. GPC measurement was performed on this film as an object to be measured. As a result, the weight average molecular weight Mw of the UHPE was 1540000.

First, the UHPE film as a substrate was irradiated with an electron beam at room temperature in a nitrogen atmosphere (first irradiation). Irradiation with the electron beam was performed from one of the principal surface of the UHPE film at an accelerating voltage of 250 kV and a radiation dose of 120 kGy. Next, the UHPE film irradiated with the electron beam was placed in a drying oven whose temperature was maintained at 60°C and left for one hour (heat treatment) so as to allow crosslinking of UHPE contained in the film to proceed. Thus, crosslinked UHPE films composed of crosslinked UHPE were obtained. The crystal melting enthalpy ratio of these crosslinked UHPE films thus obtained was 0.83.

Next, the steps subsequent to the second irradiation were carried out in the same manner as in Example 1, using the formed crosslinked UHPE films as substrates. Thus, anion exchange membranes were obtained. The grafting ratios of the obtained anion exchange membranes were 72% (immersion time of 30 minutes) and 102% (immersion time of 45 minutes), respectively, in ascending order of time in which the films after the second irradiation were immersed in the 4-(chloromethyl)styrene solution.

(Example 4)

Anion exchange membranes were obtained in the same manner as in Example 3, except that UHPE films as substrates were irradiated with an electron beam at a radiation dose of 240 kGy (i.e., the radiation dose in the first irradiation was 240 kGy) to crosslink the UHPE films. The crystal melting enthalpy ratio of the crosslinked UHPE films after the crosslinking step was 0.78. The grafting ratios of the obtained anion exchange membranes were 65% (immersion time of 15 minutes) and 85% (immersion time of 30 minutes), respectively, in ascending order of time in which the films after the second irradiation were immersed in the 4-(chloromethyl)styrene solution.

(Example 5)

Anion exchange membranes were obtained in the same manner as in Example 3, except that UHPE films as substrates were irradiated with an electron beam at a radiation dose of 720 kGy (i.e., the radiation dose in the first irradiation was 720 kGy) to crosslink the UHPE films. The crystal melting enthalpy ratio of the crosslinked UHPE films after the crosslinking step was 0.71. The grafting ratios of the obtained anion exchange membranes were 44% (immersion time of 15 minutes) and 99% (immersion time of 30 minutes), respectively, in ascending order of time in which the films after the second irradiation were immersed in the 4-(chloromethyl)styrene solution.

(Comparative Example 2)

Anion exchange membranes were obtained in the same manner as in Example 3, except that UHPE films as substrates were not subjected to the first irradiation and the subsequent heat treatment (formation of a crosslinked structure was not performed), and that the films irradiated with the electron beam for graft polymerization (the films after the second irradiation) were immersed in the 4-(chloromethyl)styrene solution for 13 minutes, 15 minutes, 20 minutes, 31 minutes, and 60 minutes, respectively. The grafting ratios of the anion exchange membranes thus obtained were 66%, 74%, 99%, 107%, and 119%, respectively, in ascending order of the immersion time. The crystal melting enthalpy ratio of the UHPE films as substrates was 0.92 when measured before the graft polymerization.

For each of the anion exchange membranes produced in Examples 3 to 5 and Comparative Example 2, the evaluation results of the ionic conductivity (anionic conductivity), the fuel permeability (hydrazine permeability coefficient), the water content, and the ratio of the hydrazine permeability coefficient to the ionic conductivity are shown in Table 2 below. As for Example 3 and Comparative Example 2, only some of the anion exchange membranes having different grafting ratios were subjected to this evaluation.

Table 2

| | Grafting ratio [%] | Ionic conductivity [mS/cm] | Water content [%] | Hydrazine permeability coefficient [mmol/(m • hr)] | Hydrazine permeability coefficient / Ionic conductivity |
|---|---|---|---|---|---|
| Example 3 | 72 | 17 | 19 | 0.064 | 0.004 |
| Example 4 | 65 | 19 | 18 | 0.190 | 0.010 |
| | 85 | 22 | 23 | 0.210 | 0.010 |
| Example 5 | 44 | 8 | 12 | 0.065 | 0.008 |
| | 99 | 14 | 27 | 0.139 | 0.010 |
| Com. Example 2 | 74 | 15 | 24 | 0.380 | 0.025 |
| | 99 | 19 | 32 | 0.529 | 0.028 |
| | 119 | 22 | 30 | 0.567 | 0.026 |

As shown in Table 2, when the membranes having the same ionic conductivity $\sigma$ were compared, the hydrazine permeability coefficients of Examples 3 to 5 were lower than those of Comparative Example 2. This means that anion exchange membranes having both high ionic conductivity and low fuel permeability were obtained. The hydrazine permeability coefficients of Examples 3 to 5 each using UHPE as a substrate were even lower than those of Examples 1 and 2 each using HDPE as a substrate. This means that anion exchange membranes having both higher ionic conductivity and lower fuel permeability were obtained.

[Resistance of Anion Exchange Membrane]

In order to examine the relationship between the resistance of the produced anion exchange membranes (alkali resistance) and the radiation dose of the first irradiation of the substrate, the anion exchange membranes (whose substrates were crosslinked) produced in Examples 3 and 4 and the anion exchange membrane (whose substrate was not crosslinked) produced in Comparative Example 2 were used to evaluate their resistance to an alkaline solution at a high temperature (i.e., the membrane weight retention rate after 300-hour immersion at 80°C). Table 3 below shows the evaluation results.

Table 3

|  | Grafting ratio [%] | Membrane weight retention rate [%] |
|---|---|---|
| Example 3 | 102 | 72 |
| Example 4 | 85 | 87 |
| Com. Example 2 | 66 | 72 |
|  | 107 | 68 |

As shown in Table 3, the membrane weight retention rate of the anion exchange membrane of Example 4 that had undergone the first irradiation at a radiation dose of 240 kGy was higher than that of the anion exchange membrane of Comparative Example 2 that had not undergone the first irradiation and that of the anion exchange membrane of Example 3 that had undergone the first irradiation at a radiation dose of 120 kGy. These results lead to the conclusion that in the case of an UHPE substrate, the radiation dose of the first irradiation of the substrate is preferably 240 kGy or more from the viewpoint of the alkali resistance of the resulting anion exchange membrane.

INDUSTRIAL APPLICABILITY

An anion exchange membrane obtained by the production method of the present invention can be used in the same applications as conventional anion exchange membranes, for example, in fuel cell membrane electrode assemblies (MEAs) and anion exchange PEFCs.

The present invention is applicable to other embodiments as long as they do not depart from the spirit or essential characteristics thereof. The embodiments disclosed in this description are to be considered in all respects as illustrative and not limiting. The scope of the invention is indicated by the appended claims rather than by the foregoing description, and all changes which come within the meaning and range of equivalency of the claims are intended to be embraced therein.

**Claims**

1.   A method for producing an anion exchange membrane, comprising the steps of:

    irradiating a substrate composed of a hydrocarbon polymer with radiation and heat-treating the irradiated substrate so as to form a crosslinked structure between chains of the hydrocarbon polymer;
    further irradiating the substrate, in which the crosslinked structure has been formed, with radiation and graft-polymerizing, onto the irradiated substrate, a monomer containing a site into which a functional group having anion conducting ability can be introduced and an unsaturated carbon-carbon bond so as to form a graft chain composed of the polymerized monomer; and
    introducing the functional group having anion conducting ability into the site of the formed graft chain.

2.   The method for producing an anion exchange membrane according to claim 1, wherein the hydrocarbon polymer is at least one selected from polyolefin, polystyrene, and polyetherketone.

3.   The method for producing an anion exchange membrane according to claim 1, wherein the hydrocarbon polymer is ultra-high molecular weight polyethylene.

4.   The method for producing an anion exchange membrane according to claim 1, wherein the monomer is halogenated alkylstyrene.

5.   A fuel cell membrane electrode assembly (MEA) comprising: an anion exchange membrane; and a catalyst layer disposed on a surface of the anion exchange membrane, wherein

the anion exchange membrane is a membrane obtained by the method for producing an anion exchange membrane according to claim 1.

6. A fuel cell comprising a membrane electrode assembly (MEA) including an anion exchange membrane, wherein the membrane electrode assembly is the fuel cell membrane electrode assembly according to claim 5.

FIG.1

FIG.2

<div align="center">**INTERNATIONAL SEARCH REPORT**</div>

| | |
|---|---|
| | International application No. |
| | PCT/JP2013/007698 |

**A. CLASSIFICATION OF SUBJECT MATTER**
*H01M8/02*(2006.01)i, *C08J5/22*(2006.01)i, *H01B13/00*(2006.01)i, *H01M8/10* (2006.01)i, *H01B1/06*(2006.01)n

According to International Patent Classification (IPC) or to both national classification and IPC

**B. FIELDS SEARCHED**

Minimum documentation searched (classification system followed by classification symbols)
H01M8/02, C08J5/22, H01B13/00, H01M8/10, H01B1/06

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-255351 A (The Salt Industry Center of Japan), 23 October 2008 (23.10.2008), claims 1, 3; paragraphs [0013], [0014], [0018], [0021] to [0024] (Family: none) | 1-4 |
| A | WO 2011/136296 A1 (AGC Engineering Co., Ltd.), 03 November 2011 (03.11.2011), claims 1 to 3; paragraphs [0014] to [0024], [0028], [0036], [0037] (Family: none) | 1-4 |

| | | | |
|---|---|---|---|
| ☒ | Further documents are listed in the continuation of Box C. | ☐ | See patent family annex. |

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>19 March, 2014 (19.03.14) | Date of mailing of the international search report<br>01 April, 2014 (01.04.14) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/007698 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-49236 A  (Japan Atomic Energy Research Institute), 22 February 1994 (22.02.1994), claims 1 to 4; paragraph [0023] & US 5648400 A claim 1; example 6 | 1-4 |
| A | JP 11-135137 A  (Asahi Glass Co., Ltd.), 21 May 1999 (21.05.1999), paragraphs [0012], [0014], [0027] (Family: none) | 1-6 |
| A | JP 2000-331693 A  (Asahi Glass Co., Ltd.), 30 November 2000 (30.11.2000), claims 2, 4; paragraph [0022] (Family: none) | 1-6 |
| P,X | WO 2013/111583 A1  (Nitto Denko Corp.), 01 August 2013 (01.08.2013), claims 1, 3; paragraphs [0014], [0016], [0019], [0036], [0043], [0051] to [0058] (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000331693 A
- JP 2010516853 T